# EUROPÄISCHE PATENTSCHRIFT

(11) **EP 1 116 294 B1**
(45) Veröffentlichungstag und Bekanntmachung des Hinweises auf die Patenterteilung: **26.05.2004**
(21) Anmeldenummer: 98966625.0
(22) Anmeldetag: 16.12.1998
(51) Int. Cl.: H01M 8/02, C04B 35/01

(54) **KUNSTSTOFFPLATTE SOWIE VERFAHREN ZUR HERSTELLUNG EINER SOLCHEN**
PLASTIC PLATE AND METHOD FOR PRODUCING THE SAME
PLAQUE DE MATIERE PLASTIQUE ET SON PROCEDE DE PRODUCTION

(30) Priorität: 16.09.1998 WO PCT/EP98/05930
(43) Veröffentlichungstag der Anmeldung: 18.07.2001
(73) Patentinhaber: Schunk Kohlenstofftechnik GmbH, D-35452 Heuchelheim (DE)
(72) Erfinder: RINN, Günter, D-35633 Lahnau (DE); LIPPERT, Hans, D-36341 Lauterbach (DE); WOLF, Reinhold, D-35444 Biebertal (DE)
(74) Vertreter: Stoffregen, Hans-Herbert, Dr. Dipl.-Phys.
(86) Internationale Anmeldenummer: PCT/EP1998/008237
(87) Internationale Veröffentlichungsnummer: WO 2000/016424

(56) Entgegenhaltungen:
- EP-A- 0 784 352
- DE-A- 19 542 721
- GB-A- 2 039 954
- US-A- 3 634 569
- US-A- 4 643 956
- PATENT ABSTRACTS OF JAPAN vol. 010, no. 108 (E-398), 23. April 1986 & JP 60 246568 A (FUJI DENKI SOUGOU KENKYUSHO:KK;OTHERS: 01), 6. Dezember 1985
- CHEMICAL ABSTRACTS, vol. 108, no. 12, 1988 Columbus, Ohio, US; abstract no. 97151, TAKANO SHIGERU, KANESHIRO TSUNEO: "Manufacture of carbon formed body" Seite 157; XP002105513 -& PATENT ABSTRACTS OF JAPAN vol. 12, no. 143 (C-492), 30. April 1988 & JP 62 260709 A (KAWASAKI STEEL CORP), 13. November 1987 -& DATABASE WPI Section Ch, Week 8751 Derwent Publications Ltd., London, GB; Class A85, AN 87-358683 XP002105514 & JP 62 260709 A (KAWASAKI STEEL CORP) , 13. November 1987
- PATENT ABSTRACTS OF JAPAN vol. 009, no. 078 (C-274), 6. April 1985 & JP 59 213610 A (SHOWA DENKO KK), 3. Dezember 1984 -& DATABASE WPI Section Ch, Week 8503 Derwent Publications Ltd., London, GB; Class L03, AN 85-016162 XP002105515 & JP 59 213610 A (SHOWA DENKO KK) , 3. Dezember 1984
- PATENT ABSTRACTS OF JAPAN vol. 005, no. 192 (E-085), 8. Dezember 1981 & JP 56 116277 A (SANYO ELECTRIC CO LTD), 11. September 1981
- PATENT ABSTRACTS OF JAPAN vol. 016, no. 556 (C-1007), 26. November 1992 & JP 04 214072 A (OSAKA GAS CO LTD), 5. August 1992 -& DATABASE WPI Section Ch, Week 9238 Derwent Publications Ltd., London, GB; Class A21, AN 92-310840 XP002105516 & JP 04 214072 A (OSAKA GAS CO LTD) , 5. August 1992
- PATENT ABSTRACTS OF JAPAN vol. 008, no. 131 (E-251), 19. Juni 1984 & JP 59 042781 A (TOUKAI CARBON KK), 9. März 1984 -& DATABASE WPI Section Ch, Week 8416 Derwent Publications Ltd., London, GB; Class A14, AN 84-097589 XP002105517 & JP 59 042781 A (TOKAI CARBON KK) , 9. März 1984
- PATENT ABSTRACTS OF JAPAN vol. 098, no. 011, 30. September 1998 & JP 10 162838 A (TORAY IND INC), 19. Juni 1998
- TAKANO S ET AL: "MANUFACTURE OF PHOSPHORIC ACID-RESISTANT CARBON PLATES" CHEMICAL ABSTRACTS + INDEXES, Bd. 108, Nr. 16, 1. April 1988, Seite 308 XP000017837 -& PATENT ABSTRACTS OF JAPAN vol. 12, no. 155 (C-494), 12. Mai 1988 & JP 62 270412 A (KAWASAKI STEEL CORP), 24. November 1987 -& DATABASE WPI Section Ch, Week 8801 Derwent Publications Ltd., London, GB; Class E36, AN 88-004769 XP002105518 & JP 62 270412 A (KAWASAKI STEEL CORP) , 24. November 1987
- PATENT ABSTRACTS OF JAPAN vol. 009, no. 318 (E-366), 13. Dezember 1985 & JP 60 150559 A (SHOWA DENKO KK), 8. August 1985

## Beschreibung

Die Erfindung bezieht sich auf eine elektrisch leitende Platte mit einer von ihrer Ober- bzw. Unterseite gebildeten Plattenebene, insbesondere eine gas- und/oder flüssigkeitsdichte Platte, die im Heißpressverfahren hergestellt und zumindest in einer Seite strukturiert ist, bestehend aus einem Kunststoff mit Kohlenstoff-Füllstoff mit einem Füllstoffanteil von insbesondere 70 Gew.-% bis 95 Gew.-%. Ferner bezieht sich die Erfindung auf ein Verfahren zur Herstellung einer elektrisch leitenden Platte mit einer von ihrer Oberseite bzw. einer Unterseite gebildeten Plattenebene im Heißpressverfahren, insbesondere einer gas- und/oder flüssigkeitsdichten Platte, die zumindest in einer Seite strukturiert wird, bestehend aus einem Kunststoff mit Kohlenstoff-Füllstoff.

Eine elektrisch leitende Platte der zuvor genannten Art ist aus GB 2 039 954 A bekannt. Die Platte ist ein Formteil aus elektrisch leitfähigen Kohle-/Graphitpartikeln und thermoplastischen Fluor-Kohlenstoffpolymerharzpartikeln in einem Gewichtsverhältnis von 2,5 : 1 bis 16 :1 und weist einen spezifischen elektrischen Volumenwiderstand auf, der kleiner ist als 100 x 10⁻⁶ µm. Die Kohlenstoffpartikel weisen durch Siebanalyse bestimmt eine Korngröße kleiner als 40 µm auf.

Aus der DE 195 42 721 ist es bekannt, Kunststoff-Füllstoff-Mischungen durch Extrudieren zu Platten zu formen. Durch das Extrudieren bedingt müssen die dem Extruder zugeführten Mischungen bestimmte Temperaturen einhalten, um eine Masseförderung sicherzustellen.

Der vorliegenden Erfindung liegt das Problem zu Grunde, eine Platte der eingangs genannten Art sowie ein Verfahren zum Herstellen einer solchen derart weiterzubilden, dass die Platte eine hohe Formstabilität bei einfachem Herstellungsprozess aufweist, wobei diese sowohl hinsichtlich des spezifischen elektrischen Widerstands als auch der Temperaturbeständigkeit hohen Anforderungen genügen soll. Dabei soll eine hinreichende Reproduzierbarkeit der Materialeigenschaften gegeben sein, um auch großtechnisch Platten herstellen zu können.

Auch soll die Platte gewünschte Geometrien bzw. Strukturen aufweisen können, ohne dass es aufwendiger Nacharbeiten bedarf. Ferner soll die Platte im gewünschten Umfang gas- und/oder flüssigkeitsdicht sein.

Erfindungsgemäß wird das Problem dadurch gelöst, daß der Kunststoff der Platte ein Duroplast ist dass der Füllstoff der Platte aus isometrischen Kohlenstoffpartikeln besteht, dass die Platte durch senkrecht zur Plattenebene gerichtetes axiales Pressen hergestellt ist, dass die Platte senkrecht zur Plattenebene einen spezifischen elektrischen Widerstand kleiner 500 x 10⁻⁶ Ωm aufweist und dass die Platte carbonisiert und zur Erzielung einer Gas- und/oder Flüssigkeitsdichtheit imprägniert ist.

Insbesondere ist vorgesehen, dass der Füllstoff der Platte aus isometrischen Kohlenstoffpartikeln einer Kornverteilung mit einer Korngröße zwischen 1 µm und 250 µm besteht.

Insbesondere kann der Kunststoff ein Phenolharz sein oder dieses enthalten. Ferner kann zur Verbesserung der elektrischen Leitfähigkeit der Kunststoff elektrisch leitfähig sein und/oder elektrisch leitende Partikel enthalten. Auch kann die Platte bis zu 20 % Kohlenstoff-Verstärkungsfasern in Form von Kurzschnittfasern, Langfasern, Gewebe und/oder Filz enthalten.

Die vorzugsweise aus duroplastischem Werkstoff mit Kohlenstoff-Füllstoffen bestehende Platte ist auf einfache Weise herstellbar, wobei aufgrund des extrem hoben Füllgrades und der Verwendung von weitgehend isometrischen Füllstoffen spezifische Werkstoffeigenschaften erzielbar sind. So ist ein spezifischer elektrischer Widerstand von insbesondere weniger als 250 x 10⁻⁶ Ωm erzielbar, gemessen parallel zur Pressrichtung, d. h. senkrecht zur Plattenebene. Sofern die Platte nach dem Pressen einer Carbonisierung des Bindemittels nicht unterzogen wird, ist die Platte gas- und/oder flüssigkeitsdicht. Es ist eine Temperaturbeständigkeit im Bereich zwischen 200 und 250° C erzielbar. Auch ist die Platte derart formstabil, dass ein sogenanntes Kriechen unter Druck und Temperatur unterbleibt.

Dadurch, dass die Platte durch plastische Formgebung in einem Heißpressverfahren herstellbar ist, können im großen Umfang gewünschte Geometrien und Konturen erzielt werden, die auf einer oder auf beiden Außenflächen eingeformt sein können. Die durch das Heißpressverfahren hergestellten Platten weisen eine hohe Präzision auf, so dass ein unmittelbarer Einsatz ohne oder nur mit minimaler Nacharbeit möglich ist.

Alternativ besteht die Möglichkeit, dass die geformten Platten anschließend carbonisiert werden. Hierdurch werden die elektrische Leitfähigkeit und die Wärmeleitfähigkeit verbessert. Es ergibt sich eine höhere Temperatur- und Chemikalienbeständigkeit. Durch das Verkoken kann die Gas- und/oder Flüssigkeitsdichtheit der Platte verloren gehen. Die Gas- und/oder Flüssigkeitsdichtheit kann jedoch auch durch eine nachfolgende Imprägnierung wie Kunstharz-Imprägnierung wieder erreicht werden.

Ein selbständiger Lösungsvorschlag zeichnet sich dadurch aus, dass die Platte aus einer aus Kohlenstofffasergewebe oder -filze hergestellten Preform, laminiert mit einer kohlenstoffpartikelhaltigen Kunststoffmasse, besteht.

Ein Verfahren zur Herstellung einer elektrisch leitenden Platte mit einer von ihrer Ober- bzw. Unterseite gebildeten Ebene, insbesondere einer gas- und/oder flüssigkeitsdichten Platte im Heißpressverfahren, die zumindest in einer Seite strukturiert ist, bestehend aus einem Kunststoff mit Kohlenstoff-Füllstoff mit einem Füllstoffanteil von insbesondere 70 Gew.-% - 95 Gew.-% zeichnet sich z. B. durch die Verfahrensschritte aus
- Einfüllen von Komponenten in Form von Duroplast als dem Kunststoff und Kohlenstoff- Partikeln mit isometrischer Kornform als dem Füllstoff in einen Mischer, wobei die Kohlenstoffpartikel eine mittlere Korngröße zwischen 1 µm und 250 µm aufweisen,
- Vermischung der Komponenten unter gleichzeitiger Wärmezufuhr,
- Entnahme der Mischung aus dem Mischer und Erstarrenlassen der Mischung,
- Aufmahlen der Mischung zu Körnern einer mittleren Größe zwischen 50 bis 500 µm,
- Einfüllen der aufgemahlenen Mischung in eine Pressform einer Heißpresse,
- plastisches Verformen der Mischung zu einer Platte durch axiales Heißpressen - senkrecht zur Plattenebene,
- Aushärten der Mischung und Entnahme der Platte aus der Pressform.
- Entnahme der Platte aus der Pressform und insbesondere
- Wärmebehandlung nach erfolgter Ausformung.

Alternativ können auch andere Verfahren zur Herstellung einer pressfähigen Masse eingesetzt werden: zum Beispiel Granulierverfahren, Lösungsmittel zum Anlösen des Bindemittels, usw..

Mit dem erfindungsgemäßen Verfahren lassen sich großformatige, dünne Platten mit Abmessungen von zum Beispiel 500 x 500 x 4 mm³ herstellen. Bei geeigneter Werkzeugauslegung können auch Bohrungen und/oder Durchbrüche eingeformt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von Ausführungsbeispielen.

### Beispiel 1

Zur Herstellung einer Kunststoff-Füllstoff-Mischung wurden als Mischungsbestandteile 900 g Graphit einer Kornfraktion ≤ 200 µm und isometrischer Kornform, 100 g Phenolharz (Novolak Hexamethylentetramin) in einen Mischer bei einer Temperatur von 80° C über einen Zeitraum von 10 Minuten vermischt.

Nach dem Austragen der Mischung aus dem Mischer und Erstarren dieser wurde die Masse einer Mühle zugeführt, um Mahlgut einer Fraktion < 1 mm zu gewinnen. Eine vorher abgewogene oder volumetrisch dosierte Masse der Mischung wurde sodann in ein Heißpresswerkzeug gefüllt, um sodann durch axiales, also vertikales Bewegen des Oberstempels die Presse zu schließen. Nach Aufsetzen des Oberstempels auf die Masse beginnt deren Erweichen, Verdichten und Aushärtung infolge der Berührung der Pressmasse mit den heißen Stempelwandungen, um nach Abschluss des Pressvorganges eine Platte mit den Abmessungen von 220 x 100 x 8 mm³ bezogen auf Länge, Breite und Dicke zu erhalten. Messungen an der Platte haben folgende physikalische Werte ergeben:

| spezifischer elektrischer Widerstand: | |
|---|---|
| senkrecht zur Plattenebene | 120 µΩm |
| in der Plattenebene | 85 µΩm |
| Temperaturbeständigkeit: | ca. 250 °C |
| Maßgenauigkeit: | ca. 0,1 % |

### Beispiel 2

Zur Herstellung einer Kunststoff-Füllstoff-Mischung wurden als Mischungsbestandteile 900 g Graphit einer Kornfraktion bis 200 µm und isometrischer Kornform, 100 g Phenolharz (Novolak Hexamethylentetramin) in einen Mischer bei einer Temperatur von 80° C über einen Zeitraum von 10 Minuten vermischt.

Nach dem Austragen der Mischung aus dem Mischer und Erstarren dieser wurde die Masse einer Mühle zugeführt, um Mahlgut einer Fraktion < 1 mm zu gewinnen. Eine vorher abgewogene oder volumetrisch dosierte Masse der Mischung wurde sodann in ein Heißpresswerkzeug gefüllt, um sodann durch axiales, also vertikales Bewegen des Oberstempels die Presse zu schließen. Nach Aufsetzen des Oberstempels auf die Masse beginnt deren Erweichen, Verdichten und Aushärtung infolge der Berührung der Pressmasse mit den heißen Stempelwandungen. Nach der Formgebung wurde die Platte mit Aufheizraten von 20 °C/h und einer Maximaltemperatur von 1000 °C carbonisiert.

Man erhielt ohne wesentliche Maßänderung eine Platte aus einem All-Carbon-Werkstoff ohne Einschränkungen der Temperatur- und Chemikalienbeständigkeit. Die Platte wies eine offene Porosität von 10 bis 20 Vol.-% auf und war nicht mehr gasdicht.

### Beispiel 3

Zur Herstellung einer Kunststoff-Füllstoff-Mischung wurden als Mischungsbestandteile 700 g Graphit einer Kornfraktion bis 200 µm und isometrischer Kornform, 300 g Phenolharz (Novolak Hexamethylentetramin) in einen Mischer bei einer Temperatur von 80° C über einen Zeitraum von 10 Minuten vermischt.

Nach dem Austragen der Mischung aus dem Mischer und Erstarren dieser wurde die Masse einer Mühle zugeführt, um Mahlgut einer Fraktion < 1 mm zu gewinnen. Eine vorher abgewogene oder volumetrisch dosierte Masse der Mischung wurde sodann in ein Heißpresswerkzeug gefüllt, um sodann durch axiales, also vertikales Bewegen des Oberstempels die Presse zu schließen. Nach Aufsetzen des Oberstempels auf die Masse beginnt deren Erweichen, Verdichten und Aushärtung infolge der Berührung der Pressmasse mit den heißen Stempelwandungen. Nach der Formgebung wurde die Platte mit Aufheizraten von 1 - 5°C/h und einer Maximaltemperatur von 1000 °C carbonisiert. Man erhielt ohne wesentliche Maßänderung eine Platte aus einem All-Carbon-Werkstoff ohne Einschränkungen der Temperatur- und Chemikalienbeständigkeit. Es konnte ein linearer Plattenschwund von ca. 5 % festgestellt werden. Ferner war die Platte nach dem Carbonisieren gasdicht.

Die Erfindung wird auch nachstehend anhand von einem den Zeichnungen zu entnehmenden Ausführungsbeispiel näher erläutert, aus dem sich - wie aus den Ansprüchen- für sich, und/oder in Kombination- - weitere die Erfindung prägende Merkmale ergeben.

Es zeigen:
- Fig. 1: eine Draufsicht auf eine Ausführungsform einer Platte,
- Fig. 2: einen Längsschnitt durch die Platte gemäß Fig. 1,
- Fig. 3: eine Einzelheit "Y" der Platte gemäß Fig. 2 und
- Fig. 4: eine Ansicht der Einzelheit "Y" gemäß Fig. 3.

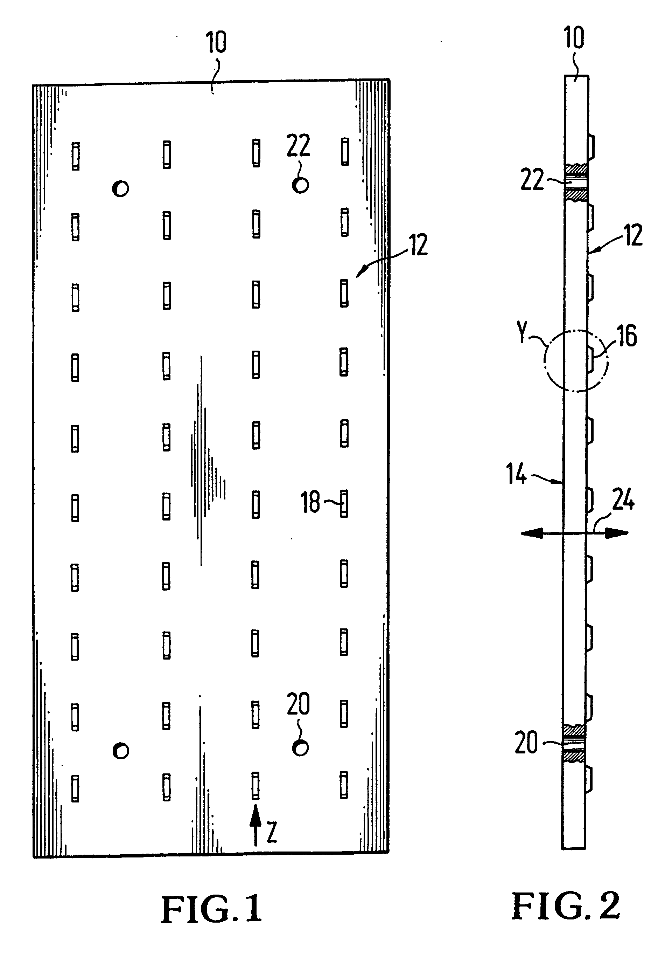

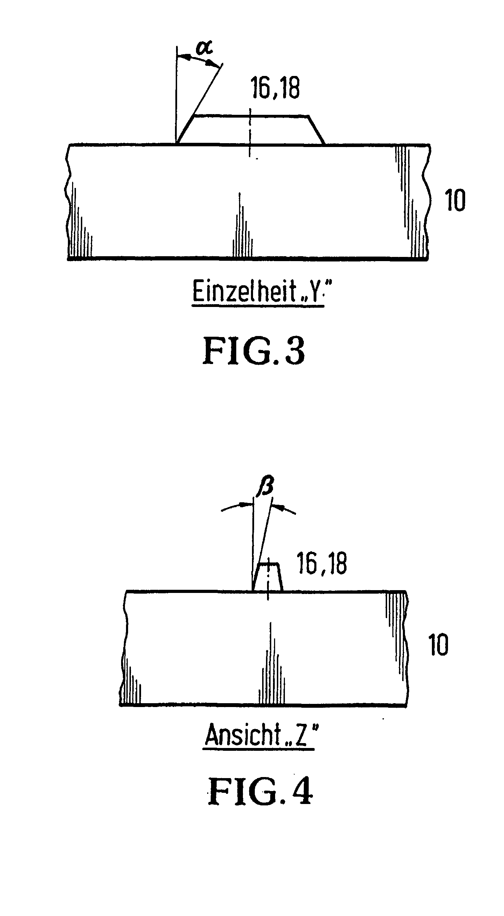

Den Fig. 1 bis 4 ist eine Ausführungsform einer erfindungsgemäßen Platte 10 zu entnehmen. Wie die Draufsicht und insbesondere die Schnittdarstellung gemäß den Fig. 1 und 2 verdeutlichen, weist die Platte 10 auf zumindest einer Oberseite 12 und/oder Unterseite 14 pyramidenstumpfförmige Erhebungen 16, 18 auf.

Die pyramidensturnpfförmigen Erhebungen 16, 18 weisen eine trapezförmige Geometrie auf. Dabei ist die längere Basisfläche plattenseitig verlaufend ausgebildet. Die Basisfläche weist in Längsrichtung eine Erstreckung auf, die vier bis sechs Mal größer als die Breite ist. Insbesondere verhält sich die Längsrichtung zur Breite 1 : 5. Stirnflächenseitig sind die pyramidenstumpfförmigen Erhebungen 16, 18 fünf bis sieben Mal, vorzugsweise sechs mal länger als in Bezug auf ihre Breite.

Die pyramidenstumpfförmigen Erhebungen 16, 18 weisen stimflächig einen Neigungswinkel α zur Plattennormale von in etwa α = 20° bis 40°, insbesondere von in etwa α = 30° auf. Die Längsseitenflächen der pyramidenstumpfförmigen Erhebungen 16, 18 weisen einen Neigungswinkel β mit insbesondere β zwischen 5° und 20°, vorzugsweise in etwa β = 10° zur Platznonnalen auf.

Aus der Draufsicht gemäß Fig. 1 bzw. der Schnittdarstellung gemäß Fig. 2 erkennt man des Weiteren, dass die Platte 10 durchgehende Bohrungen 20, 22 aufweist.

Die Platte 10 besteht aus einem duroplastischem Werkstoff mit Kohlenstoff-Füllstoffen in Form von Graphit und/oder Koks, wobei der Füllgrad extrem hoch ist.

So kann der Gehalt an duroplastischem Werkstoff nur ungefähr 10 % betragen. Die Füllstoffe selbst sollten weitgehend isometrisch sein, wenn gute elektrische Leitfähigkeit senkrecht zur Plattenebene gefordert ist.

Die Platte selbst ist durch plastische Formgebung in einem Heißpressverfahren hergestellt, wobei die Strukturen sowie Durchbrüche 16, 18 beim Pressvorgang selbst eingeprägt werden.

Durch das Herstellungsverfahren sowie die Füllstoffanteile und deren weitgehende Isometrie ergibt sich der Vorteil, dass der spezifische elektrische Widerstand der Platte in Richtung des Doppelpfeils 24 weniger als 200 x 10⁻⁶ Ωm beträgt. Der Doppelpfeil verläuft dabei parallel zur Pressrichtung, also dem axialen Verschieben eines Stempels einer Pressvorrichtung.

Die Platte 10 weist eine Temperaturbeständigkeit von in etwa 200 - 250° C auf, wobei eine Formstabilität gegeben ist, die ein Kriechen unter Druck und Temperatur verhindert. Sofern die Platte 10 nach dem Heißpressen nicht verkokt ist, ist zusätzlich eine Gas- und/oder Flüssigkeitsdichtheit gegeben.

Der Kunststoff-Werkstoff selbst kann ein elektrisch leitfähiges Kunstharz sein, wodurch sich die elektrischen Eigenschaften der Platte 10 zusätzlich verbessern lassen.

Zu den Strukturen 16, 18 ist anzumerken, dass diese im Querschnitt eine Trapezform mit außenseitig größerer Grundlinie aufweisen können. Dabei kann der Neigungswinkel der Seitenschenkel im Bereich zwischen 1 und 40°, insbesondere im Bereich von 5 bis 30° liegen. Die Neigungswinkel erleichtem zunächst die Entformung, können aber auch, vor allem bei größeren Winkeln, eine Ausrichtung der Graphitpartikel parallel zur Oberfläche und die elektrische Leitfähigkeit senkrecht zur Plattenebene verbessern.

## Patentansprüche

1. Elektrisch leitende Platte (10) mit einer von ihrer Ober- (12) bzw. Unterseite (14) gebildeten Plattenebene, insbesondere eine gas- und/oder flüssigkeitsdichte Platte, die im Heißpressverfahren hergestellt und zumindest in einer Seite strukturiert ist, bestehend aus einem Kunststoff mit Kohlenstoff-Füllstoff mit einem Füllstoffanteil von insbesondere 70 Gew.-% bis 95 Gew.-%,
**dadurch gekennzeichnet,**
**dass** der Kunststoff der Platte (10) ein Duroplast ist,
**dass** der Füllsloff der Platte (10) aus isometrischen Kohlenstoffpartikeln besteht,
**dass** die Platte durch senkrecht zur Plattenebene gerichtetes axiales Pressen hergestellt ist, dass die Platte senkrecht zur Plattenebene einen spezifischen elektrischen Widerstand kleiner 500 x 10⁻⁶ Ωm aufweist und dass die Platte carbonisiert und zur Erzielung einer Gas- und/oder Flüssigkeitsdichtheit imprägniert ist.

2. Platte nach Anspruch 1,
**dadurch gekennzeichnet,**
**dass** der Füllstoff der Platte (10) aus isometrischen Kohlenstoffpartikeln einer Kornverteilung mit einer Korngröße zwischen 1 µm und 250 µm besteht.

3. Platte nach Anspruch 1 oder 2,
**dadurch gekennzeichnet,**
**dass** die Platte (10) aus einer aus Kohlenstofffasergewebe oder -filz hergestellten Preform laminiert mit einer kohlenstoffpartikelhaltigen Duroplastmasse besteht.

4. Platte nach zumindest einem der vorhergehenden Ansprüche,
**dadurch gekennzeichnet,**
**dass** die Platte (10) bis zu 20 % Verstärkungsfasern in Form von Kurzschnittfasern, Langfasern, Gewebe und/oder Filz aufweist.

5. Platte nach zumindest einem der vorhergehenden Ansprüche,
**dadurch gekennzeichnet,**
**dass** die Platte (10) einen spezifischen elektrischen Widerstand parallel zur Pressrichtung (20) von kleiner 250 x 10⁻⁶ Ωm aufweist.

6. Platte nach zumindest einem der vorhergehenden Ansprüche,
**dadurch gekennzeichnet,**
**dass** der Füllstoff der Platte (10) aus Graphit und/oder Koks besteht.

7. Platte nach Anspruch 1,
**dadurch gekennzeichnet,**
**dass** der Füllstoff in der Platte (10) aus Kohlenstoffpartikeln mit einer mittleren Korngröße zwischen 1 µm und 250 µm, insbesondere im Bereich von in etwa 50 bis 100 µm besteht.

8. Platte nach Anspruch 2,
**dadurch gekennzeichnet,**
**dass** die Kohlenstoffpartikel eine mittlere Korngröße zwischen 50 bis 100 µm aufweisen.

9. Platte nach zumindest einem der vorhergehenden Ansprüche,
**dadurch gekennzeichnet,**
**dass** der Kunststoff Phenolharz ist oder enthält.

10. Platte nach zumindest einem der vorhergehenden Ansprüche,
**dadurch gekennzeichnet,**
**dass** der Kunststoff elektrisch leitfähig ist.

11. Verfahren zur Herstellung einer elektrisch leitenden Platte mit einer von ihrer Ober- bzw. Unterseite gebildeten Plattenebene im Heißpressverfahren, insbesondere einer gas- und/oder flüssigkeitsdichten Platte, die zumindest in einer Seite strukturiert wird, bestehend aus einem Kunststoff mit Kohlenstoff-Füllstoff mit einem Füllstoffanteil von insbesondere 70 Gew.-% bis 95 Gew.-%, **gekennzeichnet durch** die Verfahrensschritte:
- Einfüllen von Komponenten in Form von Duroplast als dem Kunststoff und Kohlenstoff-Partikeln mit isometrischer Kornform als dem Füllstoff in einen Mischer, wobei die Kohlenstoffpartikel eine mittlere Korngröße zwischen 1 µm und 250 µm aufweisen,
- Vermischung der Komponenten unter gleichzeitiger Wärmezufuhr,
- Entnahme der Mischung aus dem Mischer und Erstarrenlassen der Mischung,
- Aufmahlen der Mischung zu Körnern einer mittleren Größe zwischen 50 bis 500 µm,
- Einfüllen der aufgemahlenen Mischung in eine Pressform einer Heißpresse,
- plastisches Verformen der Mischung zu einer Platte **durch** axiales Heißpressen senkrecht zur Plattenebene,
- Aushärten der Mischung und Entnahme der Platte aus der Pressform.

12. Verfahren nach Anspruch 11,
**dadurch gekennzeichnet,**
**dass** die Platte (10) nach dem Ausformen wärmebehandelt wird.

13. Verfahren nach Anspruch 11,
**dadurch gekennzeichnet,**
**dass** die Platte carbonisiert wird.

14. Verfahren nach Anspruch 13,
**dadurch gekennzeichnet,**
**dass** die Platte nach dem Carbonisieren imprägniert wird.

## Claims

1. Electrically conductive sheet (10) with a sheet plane formed by its upper side (12) and lower side (14), in particular a gas-tight and/or liquid-tight sheet which is produced by hot press moulding and textured at least in one side, consisting of a plastics material with carbon filler having a filler content of, in particular, 70% by weight to 95% by weight, **characterised in that** the plastics material of the sheet (10) is a thermoset material, **in that** the filler of the sheet (10) consists of isometric carbon particles, **in that** the sheet is produced by axial pressing orientated perpendicularly to the plane of the sheet, **in that** the sheet has a specific electrical resistance of less than 500 x 10⁻⁶ Ωm perpendicularly to the plane of the sheet and **in that** the sheet is carbonised and is impregnated to achieve tightness to gas and/or liquid.

2. Sheet according to claim 1, **characterised in that** the filler of the sheet (10) consists of isometric carbon particles in a particle distribution having a particle size between 1 µm and 250 µm.

3. Sheet according to claim 1 or 2, **characterised in that** the sheet (10) consists of a preform produced from carbon fibre woven fabric or felt laminated with a thermoset material which contains particles of carbon.

4. Sheet according to at least one of the preceding claims, **characterised in that** the sheet (10) contains up to 20% of reinforcing fibres in the form of short cut fibres, long fibres, woven fabric and/or felt.

5. Sheet according to at least one of the preceding claims, **characterised in that** the sheet (10) has a specific electrical resistance parallel to the pressing direction (20) of less than 250 x 10⁻ Ωm.

6. Sheet according to at least one of the preceding claims, **characterised in that** the filler of the sheet (10) consists of graphite and/or coke.

7. Sheet according to claim 1, **characterised in that** the filler in the sheet (10) consists of carbon particles having an average particle size between 1 µm and 250 µm, in particular in the range of about 50 to 100 µm.

8. Sheet according to claim 2, **characterised in that** the carbon particles have an average particle size between 50 and 100 µm.

9. Sheet according to at least one of the preceding claims, **characterised in that** the plastics material is or contains phenolic resin.

10. Sheet according to at least one of the preceding claims, **characterised in that** the plastics material is electrically conductive.

11. Method of producing by hot press moulding an electrically conductive sheet with a sheet plane formed by its upper side and lower side, in particular a gas-tight and/or liquid-tight sheet which is textured at least in one side, consisting of a plastics material with carbon filler having a filler content of, in particular, 70% by weight to 95% by weight, **characterised by** the method steps:
- introducing components in the form of thermoset material as the plastics material and carbon particles with an isometric particle form as the filler into a mixer, the carbon particles having an average particle size between 1 µm and 250 µm,
- blending the components while simultaneously supplying heat,
- removing the mixture from the mixer and allowing the mixture to solidify,
- grinding the mixture into particles having an average size between 50 and 500 µm,
- introducing the ground mixture into a compression mould of a hot press,
- plastic deformation of the mixture to a sheet by axial hot pressing perpendicularly to the plane of the sheet,
- curing the mixture and removing the sheet from the compression mould.

12. Method according to claim 11, **characterised in that** the sheet (10) is heat-treated after being removed from the mould.

13. Method according to claim 11, **characterised in that** the sheet is carbonised.

14. Method according to claim 13, **characterised in that** the sheet is impregnated after carbonisation.

## Revendications

1. Plaque (10) conductrice d'électricité, plane par ses faces supérieure (12) et inférieure (14), notamment étanche aux gaz et/ou aux liquides, fabriquée par pressage à chaud avec structuration d'au moins une face et composée d'une matière plastique avec une matière de charge au carbone, la proportion en matière de charge étant de 70 à 95 % en poids,
**caractérisée en ce que**
- la matière plastique de la plaque (10) est thermodurcissable,
- la matière de charge de la plaque (10) est composée de particules isométriques de carbone,
- la plaque est fabriquée par pressage axial perpendiculaire au plan de la plaque,
- la plaque, perpendiculairement à son plan, présente une résistance électrique spécifique inférieure à 500 x 10⁻⁶ Ωm, et
- la plaque est carbonisée et imprégnée pour obtenir une étanchéité aux gaz et/ ou aux liquides.

2. Plaque selon la revendication 1,
**caractérisée en ce que**
la matière de charge de la plaque (10) est constituée de particules isométriques de carbone d'une granulométrie comprise entre 1 et 250 microns.

3. Plaque selon l'une quelconque des revendications 1 ou 2,
**caractérisée en ce que**
la plaque (10) est composée d'une préforme réalisée à partir d'un feutre ou d'un tissé de fibres de carbone, laminée avec une masse thermodurcissable tenant des particules de carbone.

4. Plaque selon l'une quelconque des revendications précédentes,
**caractérisée en ce que**
la plaque (10) présente jusqu'à 20 % de fibres de renforcement sous forme de fibres courtes, de tissu et/ou de feutre.

5. Plaque selon l'une quelconque des revendications précédentes,
**caractérisée en ce que**
la plaque (10) présente, parallèlement à la direction de pressage (20) une résistance électrique spécifique inférieure à 250 x 10⁻⁶ Ωm.

6. Plaque selon l'une quelconque des revendications précédentes,
**caractérisée en ce que**
la matière de charge de la plaque (10) est constituée de graphite ou de coke.

7. Plaque selon la revendication 1,
**caractérisée en ce que**
la matière de charge de la plaque (10) est composée de particules de carbone d'une granulométrie moyenne comprise entre 1 et 250 microns, en particulier entre 50 et 100 microns environ.

8. Plaque selon la revendication 2,
**caractérisée en ce que**
les particules de carbone présentent une granulométrie moyenne comprise entre 50 et 100 microns.

9. Plaque selon l'une quelconque des revendications précédentes,
**caractérisée en ce que**
la matière plastique est ou contient une résine phénolique.

10. Plaque selon l'une quelconque des revendications précédentes,
**caractérisée en ce que**
la matière plastique est conductrice de l'électricité.

11. Procédé de fabrication d'une plaque conductrice de l'électricité plane par ses faces supérieure (12) et inférieure (14), notamment étanche aux gaz et/ou aux liquides, fabriquée par pressage à chaud avec structuration d'au moins une face et composée d'une matière plastique avec charge au carbone, la proportion de charge étant de 70 à 95 % en poids, ce procédé comportant les étapes suivantes :
- introduction, dans un mélangeur, des composants thermodurcissables en tant que matière plastique et de particules isométriques de carbone en tant que matériau de charge présentant une granulométrie moyenne comprise entre 1 et 250 microns,
- mélange des composants avec en même temps apport de chaleur,
- extraction du mélange que l'on laisse se solidifier,
- broyage du mélange pour le transformer en grains d'une dimension moyenne comprise entre 50 et 500 microns,
- introduction du mélange broyé dans un moule de pressage d'une presse chauffante,
- déformation plastique du mélange pour donner une plaque, par pressage à chaud, axial perpendiculairement au plan de la plaque,
- solidification de la plaque, puis extraction de celle-ci du moule de pressage.

12. Procédé selon la revendication 11,
**caractérisé en ce que**
la plaque (10), après démoulage, est traitée à chaud.

13. Procédé selon la revendication 11,
**caractérisé en ce que**
la plaque est carbonisée.

14. Procédé selon la revendication 13,
**caractérisé en ce que**
la plaque, après carbonisation, reçoit une imprégnation.
